# EUROPÄISCHE PATENTSCHRIFT

(11) **EP 2 131 167 B1**
(45) Veröffentlichungstag und Bekanntmachung des Hinweises auf die Patenterteilung: **26.12.2012**
(21) Anmeldenummer: 09007409.7
(22) Anmeldetag: 04.06.2009
(51) Int. Cl.: G01G 19/12, G01G 19/04, G01G 23/00, G01S 17/88, G01S 7/00, G01G 23/37

(54) **Vorrichtung zur Ermittlung des Ladezustandes von Fahrzeugen**
Device for calculating the load state of vehicles
Dispositif d'établissement de l'état de chargement de véhicules

(30) Priorität: 04.06.2008 AT 8972008
(43) Veröffentlichungstag der Anmeldung: 09.12.2009
(73) Patentinhaber: Tarter, Philipp, 1180 Wien (AT)
(72) Erfinder: Tarter, Philipp, 1180 Wien (AT)
(74) Vertreter: Grabherr, Claudia

(56) Entgegenhaltungen:
- WO-A-02/16890
- WO-A-2007/028624
- DE-A1- 10 025 075
- US-A- 3 428 139
- US-A- 5 735 580
- US-B1- 6 339 397

## Beschreibung

Die Erfindung betrifft eine Vorrichtung zur Ermittlung des Ladezustandes von Fahrzeugen, inbesondere Eisenbahnfahrzeugen.

Für Transportunternehmen ist es wünschenswert, den Beladungszustand von Fahrzeugen feststellen zu können, insbesondere wenn diese über ein weites Gebiet verstreut und schwer zugänglich sind. Dies ist z.B. bei Eisenbahnfahrzeugen und insbesondere bei Güterwaggons der Fall, die manchmal über große Gebiete verstreut längere Zeit abgestellt und dann wieder verschoben werden. Dabei ist vor allem die Information interessant, ob der Waggon beladen ist oder ob er nicht beladen ist. Eine genaue Information, zu welchem Nutzungsgrad ein Waggon tatsächlich beladen ist, muss bei der vorliegenden Erfindung nicht berücksichtigt werden, kann aber durchaus auch zu diesem Ergebnis führen.

Die bisher bekannten Beladungssensoren für Güterwaggons entsprechen nicht den derzeitigen Anforderungen in der rauen Praxis. Demzufolge soll der Beladungssensor wartungsfrei sein und im rauen Umfeld der Transportbeförderung und insbesondere der Eisenbahn überlebensfähig sein. Weiters ist es erforderlich, dass die Vorrichtung zur Ermittlung des Ladezustandes für verschiedene Waggontypen einsetzbar sind, wie z.B. Waggons für Schüttgut und auch Waggons für den Autotransport etc.

Bekannt ist es geworden, Ultraschallsensoren zu verwenden, die vom Wagenaufbau auf die Schiene gerichtet sind. Nachteilig ist dabei, dass diese Sensoren in Kurven nicht verwendbar sind, weil sie neben der Schiene den Untergrund anpeilen und daher falsche Ergebnisse liefern. Überdies sind besonders an den Verladestellen die Schienen und das Geleise mit Unkraut überwuchert, wodurch die Messungen unbrauchbar werden. Wenn ein Waggon auf einer Weiche steht, ist diese Methode ebenfalls nicht anwendbar. Überdies sind Ultraschallsensoren sehr ungenau.

Bei herkömmlichen Waggons liegt die Einfederung des gefederten Waggonaufbaus gegenüber dem ungefederten Fahrgestell beispielsweise nur bei etwa 7 cm, wobei dieser Wert von der Waggontype abhängt. Die Unterscheidung zwischen beladen und unbeladen erfordert also relativ genaue Messungen. Mechanische Messvorrichtungen, die den Abstand zwischen Waggonaufbau und Schiene oder Eisenbahnrad messen, haben sich in der Praxis nicht bewährt.

Eine weitere bekannte Möglichkeit der Messung des Beladungszustandes liegt darin, im zentralen Lager des Drehgestells der Waggons einen piezzoelektrischen Drucksensor einzubauen. Dies ist jedoch nur bei einem Neubau eines Waggons sinnvoll, da ein Nachrüsten bestehender Waggons derart kostenintensiv wäre, dass ein solcher Umbau nicht zielführend ist. Weitere bekannte Vorrichtungen sind der WO 02/16890 A1, US 3 428 139 und US 5 735 580 zu entnehmen.

Die angeführten Nachteile können in überraschender Weise vermieden werden, wenn ein Distanzmessgerät zum Messen der Distanz zwischen Fahrzeugaufbau und Radlager vorgesehen ist. Unter Fahrzeugaufbau werden im vorliegenden Fall jene Teile des Fahrzeuges verstanden, die gegenüber den Radachsen oder Drehgestell gefedert sind und bei Beladung die Distanz zwischen Fahrzeugaufbau und Schiene bzw. den darauf rollenden Rädern verringert wird.

Die Radlager sind in bekannter Weise von außen zugänglich auf den Enden der Achsen angeordnet und stehen von den Rädern etwas vor, sodass das Radlager, dessen Gehäuse sich nicht mit dem Rad mitdreht, als Referenzpunkt zur Verfügung steht.

Das erfindungsgemäße Distanzmessgerät umfasst eine am Fahrzeugaufbau befestigte Laserstrahlquelle und einen Laserstrahlsensor, sowie eine am Radlager befestigte und von der Laserstrahlquelle angestrahlte Referenzplatte, wobei die Laufzeit des Laserstrahls zur Berechnung der Distanz mittels einer Recheneinheit herangezogen wird.

Weitere Merkmale sind den Ansprüchen und der nachfolgenden Beschreibung sowie den Zeichnungen zu entnehmen.

Im folgenden wird die Erfindung anhand eines Ausführungsbeispieles näher beschrieben. Figur 1 zeigt einen schematischen Teil-Querschnitt durch einen Eisenbahnwaggon, wobei die Eisenbahnelemente nur angedeutet sind. Figur 2 zeigt schematisch im Schrägriss die Anordnung an einem Drehgestell mit zwei Radachsen, Figur 3 eine vergrößerte Darstellung der Referenzplatte im Schnitt und Figur 4 zeigt eine Aufsicht auf diese Referenzplatte. Figur 5 zeigt im Blockschaltbild die Einbindung der Vorrichtung in ein Nachrichtenübermittlungssystem.

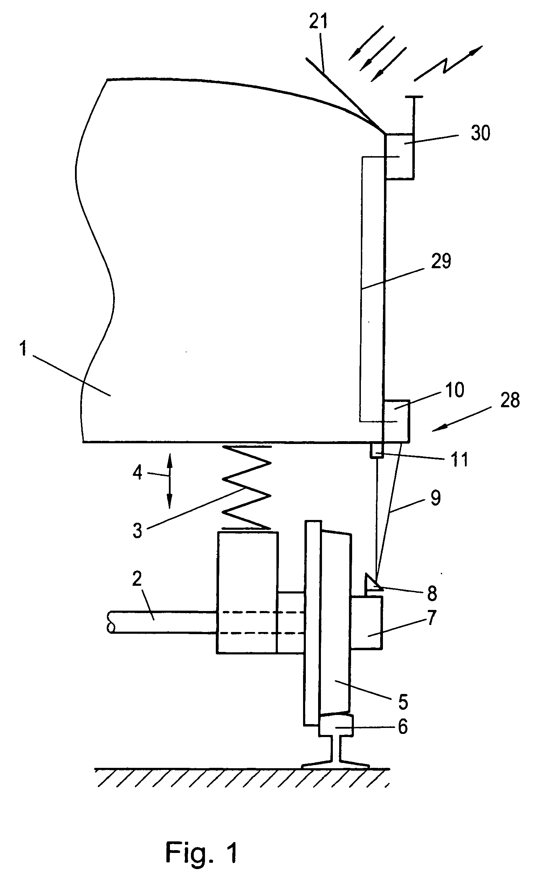

Figur 1 zeigt schematisch die Anwendung der Vorrichtung an einem Güterwaggon. Der Fahrzeugaufbau 1 dient zur Aufnahme der Beladung und ist gegenüber den Achsen 2 des Fahrzeuges gefedert, was durch die Druckfeder 3 angedeutet ist. Die Einfederung wird durch den Doppelpfeil 4 veranschaulicht. Für die vorliegende Erfindung ist es völlig unerheblich, auf welche Weise die Federung und Aufhängung der Räder unter dem Fahrzeugaufbau vorgenommen ist. Es kann sich um pneumatische oder hydraulische Federungen, um Plattfedern oder andere Federungstypen handeln. Wesentlich ist lediglich, dass durch die Beladung des Fahrzeugaufbaus dieser seinen Abstand gegenüber der Radachse 2 verringert.

Außerhalb des Rades 5, welches auf der Schiene 6 läuft, liegt das Radlager 7. Dieses sitzt auf der Achse 2 und beherbergt die entsprechende Lagerung für das sich drehende Rad 5 oder die Achse 2. Das Radlager 7 ist für die Wartung, Schmierung etc. von außen leicht zugänglich und steht daher auch auf einfacher Weise für das Nachrüsten mit der erfindungsgemäßen Vorrichtung zur Verfügung.

Auf dem Gehäuse des Radlager 7 ist eine Referenzplatte 8 angeordnet, die entweder durch das Radlagergehäuse selbst gebildet werden kann oder ein zusätzlicher aufgesetzter Bauteil ist. Die Referenzplatte 8 ist derart angeordnet, dass der Laserstrahl 9 einer Laserstrahlquelle 10 auftrifft und dass von der Referenzplatte rückstrahlende Licht vom Laserstrahlsensor 11 aufgenommen werden kann.

Im vorliegenden Ausführungsbeispiel ist die Laserstrahlquelle als getrennte Baueinheit zum Laserstrahlsensor dargestellt. Damit ist es möglich, gemäß den baulichen Gegebenheiten die jeweils optimale Position für beide Teile dieses Distanzmessgerätes 28 festzulegen. Es kann aber ebenso vorteilhaft sein, die Laserstrahlquelle und den Laserstrahlsensor in ein gemeinsames Gehäuse zu kombinieren. Wichtig ist jedenfalls, dass der Laserstrahl und dessen Laufzeit mit der nötigen Stärke wieder im Laserstrahlsensor einlangt. Diesbezüglich ist es nicht notwendig, dass die Referenzplatte 8 besonders reflektierend ausgebildet ist. Die moderne Sensortechnik erlaubt auf diesen Strecken genaue Ablesungen mit einer Genauigkeit im Millimeterbereich, wobei die Reflexionsfläche auch dunkel oder im herkömmlichen Sinn unreflektierend ausgebildet sein kann.

Das Signal des Distanzmessgerätes 28 wird über die Leitung 29 einer Ortungs- und Kommunikationseinrichtung 30 zugeleitet. Dieses und alle Messanordnungen werden von einem Solarpanel 21 mit Strom versorgt. Die Einrichtung 30 sendet das Signal des Distanzmessgerätes 28 und auch andere Signale wie Ortungsdaten als SMS-, GPRS-, oder UMTS-Nachricht an eine zentrale Empfangsstation.

Die Funktion des Distanzmessgerätes erklärt sich von selbst. Bei unbeladenem Zustand ist der Fahrzeugaufbau 1 maximal entfernt von der Radachse 2 und damit auch entfernt von der Referenzplatte 8. Somit wird das Distanzmessgerät, bestehend aus der Laserstrahlquelle 10, dem Laserstrahlsensor 11 und der zugehörigen Verrechnungseinheit, eine relativ lange Strecke messen. Die Berechnung der Strecke erfolgt üblicherweise durch die Messung der Laufzeit zwischen Absenden des Laserstrahls an der Laserstrahlquelle und Eintreffen dieses Signals am Laserstrahlsensor 11 nach Reflexion an der Referenzplatte 8.

Bei Beladung des Fahrzeugaufbaus kommt es zu einer Kompression der Federung 3 und damit zu einer Verringerung des Abstandes zwischen Fahrzeugaufbau 1 und Radachse 2. Diese Verringerung bewirkt auch eine Verkürzung der Distanz zwischen der Laserstrahlquelle 10 und -sensor 11 und der Referenzplatte 8.

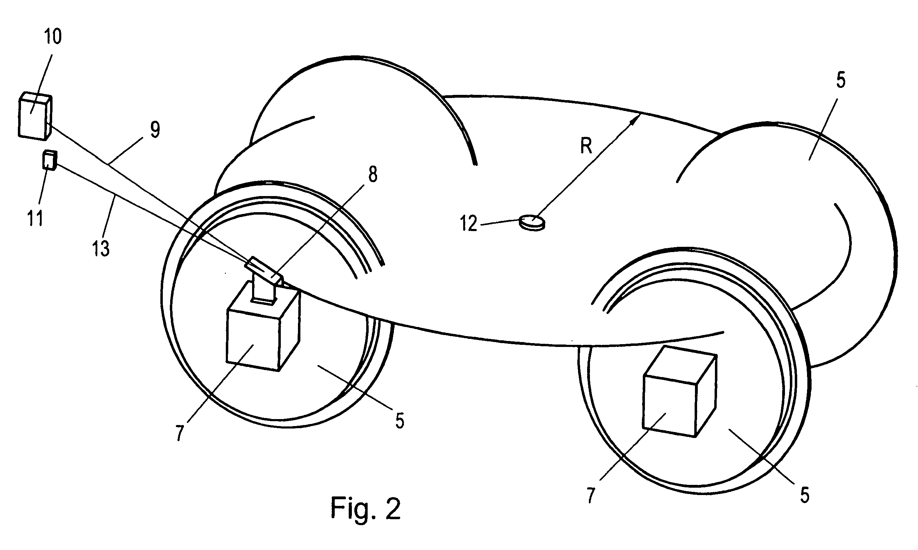

Die zuvor beschriebenen Maßnahmen würden genügen, um eine ausreichend genaue Ermittlung des Beladungszustandes zu ermöglichen, wenn die Radachsen ohne Drehgestell am Fahrzeugaufbau angeordnet sind. Dies ist jedoch zumeist nicht der Fall und es sind die Güterwaggons mit Drehgestellen versehen, die üblicherweise zweiachsig sind. Eine solche Anordnung ist in Figur 2 schematisch dargestellt, wobei zur besseren Darstellung der Fahrzeugaufbau und alle sonstigen Teile des Drehgestells weggelassen sind. Dargestellt sind die vier Räder 5 und die Drehachse 12 des Drehgestells. Bei einer Kurvenfahrt dreht sich das gesamte Drehgestell mit allen vier Rädern um diese Drehachse 12, wobei bei den in der Praxis vorkommenden Biegeradien der Geleise beispielsweise eine maximale Auslenkung von 10° zu erwarten ist. Die Auslenkung ist auch abhängig von der Waggontype.

Weiters sind die an einer Seite des Fahrzeuges sichtbaren Radlager 7 dargestellt, wobei auf einem der Radlager die Referenzplatte 8 vorgesehen ist. Weiters ist schematisch der Laserstrahl 9, der von der Laserstrahlquelle 10 ausgesendet wird, ersichtlich, wie auch der Reflexionsstrahl 13 zum Laserstrahlsensor 11.

Beim Drehen des Drehgestells um die Drehachse 12 beschreibt die Referenzplatte einen Bogen kreisförmig um die Drehachse 12 und dieser Bogen ist mit dem Bezugszeichen 14 eingezeichnet. Der Bogen 14 ist selbstverständlich nur theoretisch vorhanden, da ein Drehgestell im Fahrbetrieb niemals um 360° gedreht wird, sondern immer nur eine geringe Auslenkung erfährt, wie oben erwähnt ist.

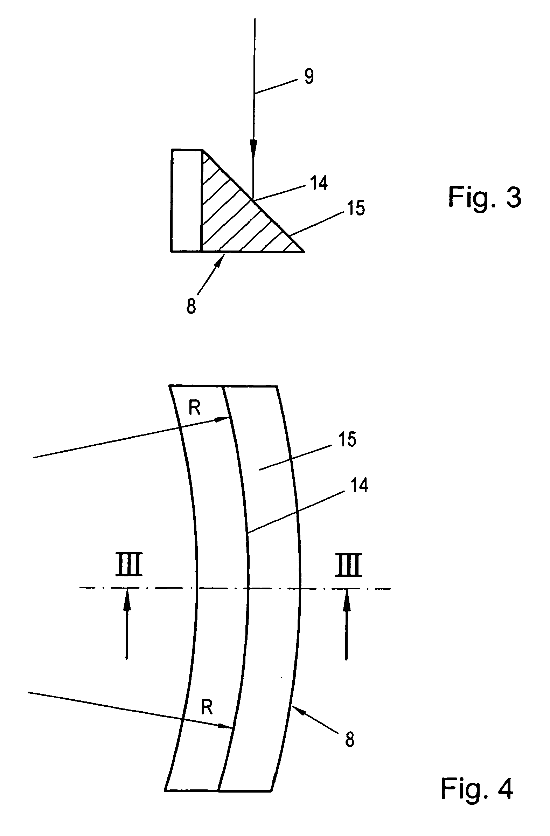

Damit gemäß Erfindung die Feststellung des Beladungszustandes des Fahrzeuges auch dann erfolgt, wenn der Waggon in einer Kurve steht oder sich in Kurvenfahrt befindet, ist die Referenzplatte bevorzugt so ausgebildet, dass sie über die in der Praxis vorkommende Auslenkung des Drehgestells einen kleinen Abschnitt des Bogens 14 überstreicht, wobei die Referenzplatte derart ausgebildet ist, dass durch den Umstand des Verschwenkens des Drehgestells keine Änderung in der Distanzmessung eintritt. Für diesen Zweck ist die Referenzplatte gebogen, wie der Figur 4 in Aufsicht zu entnehmen ist. Der Radius entspricht dem Radius R des Bogen 14 zur Drehachse 12 des Drehgestells und mit 14 ist die Auftreffspur oder Lichtspur des Laserlichtes eingezeichnet. Die Länge der Referenzplatte muss der maximalen Auslenkung, also dem Schwenkwinkel des Drehgestelles angepasst sein.

Figur 3 zeigt den Querschnitt nach der Linie III-III in Figur 4. Die Reflexionsfläche 15 ist gegenüber der Horizontalen schräggestellt, was den Vorteil mit sich bringt, dass das bei Güterwaggons immer herabfallende Ladegut oder auch Schmutz nicht haften bleibt sondern abrutscht. Die Messgenauigkeit wird dadurch nicht beeinflusst, weil die Laserdistanzmessgeräte moderner Bauart nicht von den Reflexionseigenschaften der Reflexionsfläche abhängig sind. Es entsteht in jedem Fall zumindest ein diffuses Streulicht, welches zur Messung genügt.

In den Zeichnungen ist jeweils ein Distanzmessgerät mit Bezug auf eines der Radlager des Fahrzeuges vorgesehen. Es kann vorteilhaft sein, zwei oder mehr solcher Anordnungen an einem Fahrzeug oder Waggon vorzusehen, um eine zusätzliche Kontrolle zu haben.

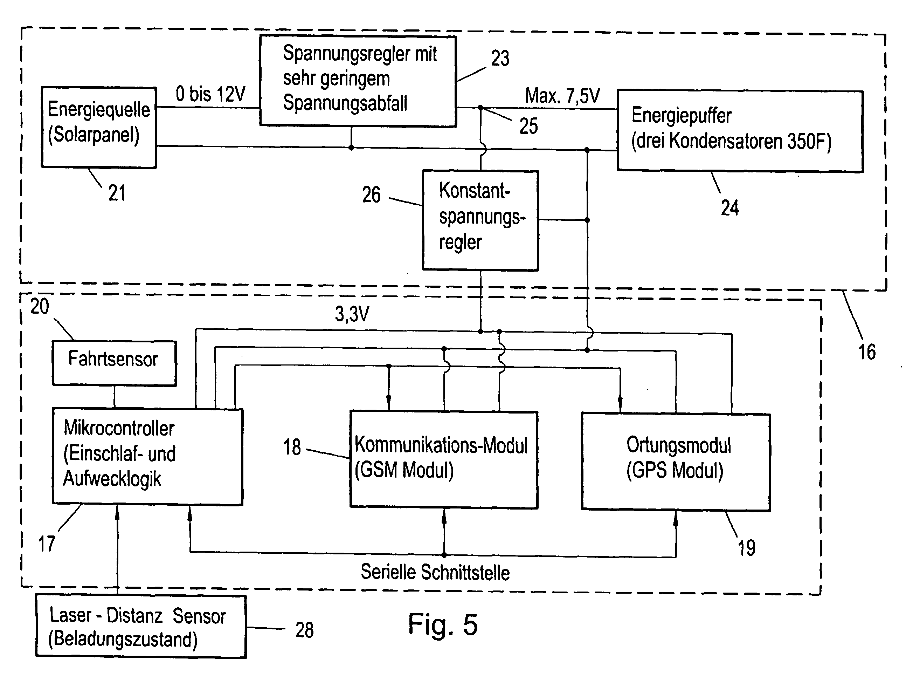

Die Figur 5 zeigt eine bevorzugte Anwendung der erfindungsgemäßen Vorrichtung zur Ermittlung des Ladezustandes eines Eisenbahnfahrzeuges. Dieses System ist in der vorveröffentlichten Österreichischen Patentanmeldung A 1466/2005 ausführlich beschrieben und auf diese Veröffentlichung wird ausdrücklich Bezug genommen.

Gemäß Blockschaltbild der Figur 5 umfasst das Gerät die Energieversorgung 16, ein elektrisches Steuergerät 17, das Kommunikationsmodul 18 und das Ortungsmodul 19. Weiters ist ein Bewegungssensor 20 vorgesehen. Alle diese Teile können sich - ausgenommen das Solarpanel - innerhalb des Gehäuses des Ortungsgerätes befinden.

Das Solarpanel 21 liefert in Abhängigkeit von der Sonneneinstrahlung Strom mit einer Spannung von 0 bis 12 Volt. Der Strom des Solarpanels wird unter Zwischenschaltung einer Rückflusssperrdiode durch einen Speise-Spannungsregler 23 auf die Höchstspannung des nachfolgenden Energiepuffers 24 herabgeregelt. Im vorliegenden Fall ist die Höchstspannung des Energiepuffers 7,5 Volt. Als Energiepuffer wird bevorzugt eine Kondensatoranordnung vorgesehen, die zB aus drei Kondensatoren mit je 350 F in Serie geschaltet besteht. Als Speise-Spannungsregler 23 wird ein solcher mit möglichst geringem Spannungsabfall eingesetzt.

Die Stromabnahme für die Stromversorgung des Gerätes erfolgt an der Verzweigungsstelle 25 zwischen Speise-Spannungsregler 23 und Energiepuffer 24 bevorzugt über einen Konstantspannungsregler 26. Solange genügend Spannung anliegt, regelt der Konstantspannungsregler 26 den Strom auf einen Betriebsstrom von etwa 3,3 Volt herunter, was durch das elektronische Steuergerät 17 überwacht wird.

Gemäß Figur 5 wird das elektronische Steuergerät 17 auch von dem Fahrtsensor 20 angesteuert, der in bevorzugter Weise ein Vibrationssensor ist, der ebenfalls im Gehäuse untergebracht sein kann. Der Fahrtsensor 20 spricht an, wenn Fahrtvibrationen auftreten und anzeigen, dass sich das Gerät gemeinsam mit dem Objekt in Bewegung befindet. Weiters wird gemeldet, wenn das Objekt steht und somit keine Vibrationen auftreten.

Das elektronische Steuergerät 17 arbeitet mit einer Aufwecklogik. Die Aufwecklogik basiert auf einer periodischen Prüfung des Bewegungssensors 20. Wenn ein voreingestellter Wert als Bewegungsschwelle wiederholt erreicht wird, wird das Gerät mit Betriebsspannung aus dem Energiepuffer oder aus der Energiequelle direkt versorgt. Das Ortungsmodul 19 liefert die Ortungskoordinaten und diese werden durch das Kommunikationsmodul 18 als Kurznachricht über das mobile Telefonnetz versendet. Die Kurznachricht wird an einen hier nicht dargestellten zentralen Kurznachrichtenempfänger übertragen und weiter ausgewertet.

Das Ortungsmodul 19 kann ein GPS-Modul und das Kommunikationsmodul 18 ein GSM-Modul sein. Selbstverständlich können diese Module nach den jeweils zur Verfügung stehenden globalen Ortungssystemen (zB das künftige Gallileo-System) und mobilen Telefonnetzen (zB auch UMTS) eingerichtet sein.

Gemäß vorliegender Erfindung und wie in Figur 5 eingezeichnet, liefert auch das Distanzmessgerät 28 ein den Beladungszustand wiedergebendes Signal an das Steuergerät 17. Der Beladungszustand wird gemeinsam mit den anderen Daten über das Kommunikationsmodul abgeschickt und kann so von einer Empfangstation ausgewertet werden. Die Ortungs- und Kommunikationseinrichtung kann alle Elemente der Figur 5 auch in einem Gehäuse beherbergen, wobei nur das Solarpanel 21 und die Laserstrahlquelle 10 und der Sensor 11 an passenden Stellen des Fahrzeuges angeordnet werden müssen.

Wenn hier vor allem die Erfindung im Zusammenhang mit Güterwaggons beschrieben ist, kann sie doch für alle Fahrzeuge und auch mit den Fahrzeugen bewegten Aufbauten verwendet werden. Beispiele sind Lastkraftwägen und deren Anhänger, Sattelschlepperauflieger, Container auf Kraftfahrzeugen oder Eisenbahnwaggons etc.

Die Erfindung eignet sich besonders für das Nachrüsten von bereits vorhandenem Fahrzeugbestand und ist bei Kombination mit der Solarstromversorgung unabhängig von externen Stromquellen.

Wenn die Referenzplatte am außenliegenden Radlager eines Eisenbahnwaggons angebracht ist, wird die Wartung besonders erleichtert. Bei Fahrzeugen ohne außenliegende Radlager kann die gesamte Anordnung des Distanzmessgerätes 28 auch an jenem Ort vorgesehen werden, an der die Einfederung des Fahrzeugaufbaues feststellbar ist. Beispielsweise kann die Referenzplatte an einem ungefederten Teil des Fahrgestelles wie z.B. ein Achslager angeordnet sein.

Die Messungen des Distanzmessgerätes können kontinuierlich oder in bestimmten Zeitabständen erfolgen. Die Messung kann auch bei Anforderung durch den Mikrocontroller als Steuergerät 17 erfolgen.

### Bezugszeichenliste:

- 1.: Fahrzeugaufbau
- 2.: Achse
- 3.: Druckfeder
- 4.: Doppelpfeil
- 5.: Rad
- 6.: Schiene
- 7.: Radlager
- 8.: Referenzplatte
- 9.: Laserstrahl
- 10.: Laserstrahlquelle
- 11.: Laserstrahlsensor
- 12.: Drehachse
- 13.: Reflexionsstrahl
- 14.: Bogen
- 15.: Reflexionsfläche
- 16.: Energieversorgung
- 17.: Steuergerät
- 18.: Kommunikationsmodul
- 19.: Ortungsmodul
- 20.: Fahrtsensor
- 21.: Solarpanel
- 22.: Rückflusssperrdiode
- 23.: Speise-Spannungsregler
- 24.: Energiepuffer
- 25.: Verzweigungsstelle
- 26.: Konstantspannungsregler
- 27.: elektrisches Steuergerät
- 28.: Distanzmessgerät
- 29.: Leitung
- 30.: Ortungs- und Kommunikationseinrichtung

## Patentansprüche

1. Vorrichtung zur Ermittlung des Ladezustandes von Fahrzeugen, insbesondere Eisenbahnfahrzeugen, wobei ein Distanzmessgerät (28) zum Messen der Distanz zwischen Fahrzeugaufbau (1) und Radlager (7) oder einem ungefederten Teil des Fahrgestelles vorgesehen ist, und das Distanzmessgerät (28) eine am Fahrzeugaufbau (1) befestigbare Laserstrahlquelle (10) und einen Laserstrahlsensor (11) sowie eine am Radlager (7) oder Teil des Fahrgestelles befestigbare und von der Laserstrahlquelle (10) angestrahlte Referenzplatte (8) umfasst und die Laufzeit des Laserstrahls (9) zur Berechnung der Distanz mittels einer Recheneinheit herangezogen wird, wobei die Referenzplatte (8) auf einem Radlager (7) anordenbur ist, das Bestandteil eines Drehgestelles inshesondere eines Eisenbahnwagons, ist, **dadurch gekennzeichnet, dass** die Referenzplatte (8) gebogen ist, wobei der Biegungsmittelpunkt mit der Drehachse (12) des Drehgestells des Fahrzeugs zusammenfällt.

2. Vorrichtung nach Anspruch 1, **dadurch gekennzeichnet, dass** die Referenzplatte (8) zur Bestrahlung mit dem Laserlicht entlang eines Bogens (14) eingerichtet ist.

3. Vorrichtung nach Anspruch 1 oder 2, **dadurch gekennzeichnet, dass** die Referenzplatte (8) eine Abmessung aufweist, die dem Schwenkwinkel des Drehgestells angepasst ist und ein Schwenken bevorzugt um wenigstens 5° und bevorzugt wenigstens 10° unter Beibehaltung der Bestrahlung zulässt.

4. Vorrichtung nach einem der vorhergehenden Ansprüche, **dadurch gekennzeichnet, dass** die Referenzplatte (8) auf dem Radlager (7) gegenüber der Horizontalen schräggestellt und gebogen ist.

5. Vorrichtung nach einem der Ansprüche 1 bis 4, **dadurch gekennzeichnet, dass** sie zu einer Distanzmessung in vorbestimmten Zeitabständen eingerichtet ist.

6. Vorrichtung nach einem der Ansprüche 1 bis 5, **dadurch gekennzeichnet, dass** die Distanzmessung bei Anforderung durch ein Abfragesignal erfolgt.

7. Vorrichtung nach einem der Ansprüche 1 bis 6, **dadurch gekennzeichnet, dass** die Stromversorgung durch einen solargespeisten Kondensatorstromspeicher erfolgt.

8. Vorrichtung nach einem der Ansprüche 1 bis 7, **dadurch gekennzeichnet, dass** der von der Recheneinheit berechnete Ladezustand einer Sendeeinheit zur drahtlosen Nachrichtenübermittlung zugeleitet wird.

9. Vorrichtung nach Anspruch 8, **dadurch gekennzeichnet, dass** die Nachrichtenübermittlung in Form einer SMS-, GPRS-, oder UMTS-Nachricht erfolgt.

10. Vorrichtung nach Anspruch 9, **dadurch gekennzeichnet**, die SMS Nachricht Bestandteil einer Nachricht ist, die auch die geographischen Ortsangaben des Fahrzeuges umfasst.

## Claims

1. Device for calculating the load state of vehicles, particularly railway vehicles, in which a distance measuring device (28) is provided for measuring the distance between the vehicle body (1) and wheel bearings (7) or an unsprung portion of the bogie, and the distance measuring device (28) comprises a laser beam source (10) that can be attached to the vehicle body (1) and a laser beam sensor (11) as well as a reference plate that can be attached to the wheel bearing (7) or part of the bogie and is illuminated by the laser beam source (10), and the travel time of the laser beam (9) is used to calculate the distance by means of a computing unit, the reference plate (8) being adapted to be mounted on a wheel bearing (7) which is part of a steered-axle bogie particularly of a railcar, **characterised in that** the reference plate (8) is curved, the centre of the curvature coinciding with the rotation axis (12) of the steered-axle bogie of the vehicle.

2. Device according to claim 1, **characterised in that** the reference plate (8) is arranged to be illuminated by the laser light along an arc (14).

3. Device according to claim 1 or 2, **characterised in that** the reference plate (8) has a dimension which is matched to the pivot angle of the steered-axle bogie and allows pivoting preferably through at least 5° and preferably at least 10°, while maintaining the illumination.

4. Device according to one of the preceding claims, **characterised in that** the reference plate (8) on the wheel bearing (7) is inclined relative to the horizontal and is curved.

5. Device according to one of claims 1 to 4, **characterised in that** it is arranged to carry out a measurement of distance at predetermined time intervals.

6. Device according to one of claims 1 to 5, **characterised in that** the distance measurement is carried out on demand by an interrogation signal.

7. Device according to one of claims 1 to 6, **characterised in that** the current supply is provided by a solar-powered capacitor energy store.

8. Device according to one of claims 1 to 7, **characterised in that** the load state calculated by the computer unit is supplied to a transmitting unit for wireless messaging.

9. Device according to claim 8, **characterised in that** the message is sent in the form of an SMS, GPRS or UMTS message.

10. Device according to claim 9, **characterised in that** the SMS message is part of a message that also comprises the geographical location data of the vehicle.

## Revendications

1. Dispositif pour déterminer l'état de chargement de véhicules, en particulier de véhicules ferroviaires, dans lequel il est prévu un appareil de mesure de distance (28) pour mesurer la distance entre la carrosserie de véhicule (1) et le roulement de roue (7) ou une partie non suspendue du châssis, et l'appareil de mesure de distance (28) comprend une source de faisceau laser (10), pouvant être fixée à la carrosserie de véhicule (1), et un capteur de faisceau laser (11), ainsi qu'une plaque de référence (8), pouvant être fixée au roulement de roue (7) ou à une partie du châssis et irradiée par la source de faisceau laser (10), et le temps de parcours du faisceau laser (9) est utilisé pour calculer la distance à l'aide d'une unité de calcul, la plaque de référence (8) pouvant être disposée sur un roulement de roue (7) qui fait partie d'un bogie, en particulier d'un wagon ferroviaire, **caractérisé en ce que** la plaque de référence (8) est incurvée, le centre de courbure coïncidant avec l'axe de rotation (12) du bogie du véhicule.

2. Dispositif selon la revendication 1, **caractérisé en ce que** la plaque de référence (8) est agencée pour l'irradiation avec la lumière laser, le long d'un arc (14).

3. Dispositif selon la revendication 1 ou 2, **caractérisé en ce que** la plaque de référence (8) présente une dimension qui est adaptée à l'angle de pivotement du bogie et autorise un pivotement, de préférence d'au moins 5° et de préférence d'au moins 10°, en conservant l'irradiation.

4. Dispositif selon une des revendications précédentes, **caractérisé en ce que** la plaque de référence (8) sur le roulement de roue (7) est inclinée par rapport à l'horizontale et incurvée.

5. Dispositif selon une des revendications 1 à 4, **caractérisé en ce qu'**il est conçu pour une mesure de distance à des intervalles de temps prédéterminés.

6. Dispositif selon une des revendications 1 à 5, **caractérisé en ce que** la mesure de distance est effectuée en cas de demande par un signal d'interrogation.

7. Dispositif selon une des revendications 1 à 6, **caractérisé en ce que** l'alimentation en courant est assurée par un accumulateur électrique à condensateur, alimenté par l'énergie solaire.

8. Dispositif selon une des revendications 1 à 7, **caractérisé en ce que** l'état de chargement, calculé par l'unité de calcul, est transmis à une unité d'émission en vue de la transmission sans fil.

9. Dispositif selon la revendication 8, **caractérisé en ce que** la transmission a lieu sous la forme d'un message SMS, GPRS ou UMTS.

10. Dispositif selon la revendication 9, **caractérisé en ce que** le message SMS fait partie d'un message qui comporte également les indications du lieu géographique du véhicule.
